# EUROPEAN PATENT SPECIFICATION

(11) **EP 1 283 791 B1**
(45) Date of publication and mention of the grant of the patent: **24.08.2005**
(21) Application number: 01922206.6
(22) Date of filing: 17.04.2001
(51) Int. Cl.: B60R 21/26

(54) **A GAS DUCT**
GASLEITUNG
CONDUITE DE GAZ

(30) Priority: 14.04.2000 GB 0009357
(43) Date of publication of application: 19.02.2003
(73) Proprietor: AUTOLIV DEVELOPMENT AB, 447 83 Vargarda (SE)
(72) Inventor: GOERTZ, Christoph, 85244 Röhrmoos (DE); SCHULLER, Hans-Werner, 85221 Dachau (DE); SATZGER, Guido, 81247 München (DE); SCHWIND, Stefan, 82140 Olching (DE)
(74) Representative: Müller, Karl-Ernst
(86) International application number: PCT/SE2001/000838
(87) International publication number: WO 2001/079041

(56) References cited:
- EP-A1- 0 816 180
- EP-A2- 0 940 304
- DE-A1- 19 738 741
- DE-A1- 19 812 915
- DE-A1- 19 926 076

## Description

**THE PRESENT INVENTION** relates to a gas duct, and more particularly a gas duct adapted to supply gas to the interior of an inflatable element in the form of an air-bag or other protective inflatable element as may be used in a motor vehicle.

Various types of air-bag have been proposed for use in a motor vehicle including an air-bag which, when inflated, is located in front of an occupant of the vehicle. Some air-bags, however, are in the form of inflatable panels or inflatable curtains, which may be located adjacent the sides of the motor vehicle, and such air-bags may particularly provide protection in the event that a side impact should occur. An air-bag of this type is shown in GB 2,297,950 A. In a typical side impact situation there is only a very brief period of time, typically less than 20 ms, in which any safety device may be deployed if the safety device is to be effective. Consequently it is necessary to inflate, in some circumstances, a relatively large air-bag, in a very brief period of time. In order to achieve this objective it has been proposed to use gas which is very light, such as helium, but the gas must travel at a very high speed in order to inflate the inflatable element or air-bag in the time available. Typically the gas is caused to flow through an elongate duct which is provided with a plurality of outlet apertures so that the gas can be directed, through the outlet apertures, to various parts of the inflatable element. An arrangement of this type is shown in GB 2,319,751 A.

It has been proposed to provide various types of hole in the gas duct. For example, EP 0 940 304 A describing the features of the preamble of claim 1 shows an arrangement in which a substantially triangular "tab" is pressed inwardly into a gas duct to form a "scoop" which is directed to the gas duct to permit gas to escape from the gas duct. The "scoop" of the gas duct shown in the European Specification resembles a "scoop" as present on a cheese-grater. The inwardly directed portion of the scoop engages the gas flow within the duct causing part of the gas flow to be deflected out of the duct.

A further type of aperture in a gas duct is shown in DE 196 27 181 AI, in which the aperture is of elongate form having a first portion of 1 width and a second portion of an alternate width.

It has been found that with the prior proposed apertures, the gas leaving the duct may have such a flow characteristic that it damages the fabric of the bag. The gas, as mentioned above, is travelling at a very high speed.

The present invention seeks to provide an improved gas duct.

According to this invention there is provided a gas supply duct for an air-bag or inflatable element, the gas supply duct being a pipe of elongate form and defining a longitudinal axis, the gas supply pipe being provided with at least one aperture therein, wherein the aperture having at least one side edge portion which is inclined relative to the longitudinal axis and is substantially linear in its planar projection, wherein the aperture being a simple opening cut in the wall of the pipe forming an unobstructed or cut-out aperture.

Preferably two opposed sides of the aperture are each provided with at least one said inclined edge portion which is substantially linear.

In one embodiment the aperture is substantially triangular.

In an alternative embodiment the aperture is trapezoidal.

In some embodiments a narrower end of the aperture is up-stream of the gas flow duct.

In an alternative embodiment a narrower end of the aperture is down-stream of the gas flow duct.

In some embodiments of the invention the aperture has two opposed sides, each opposed side having two or more of said substantially linear inclined portions.

Thus, for example, the aperture is of substantially diamond form.

In certain embodiments of the invention the aperture has two opposed sides, each side comprising four or more said substantially linear inclined portions.

Conveniently the or each inclined portion is inclined at an angle of between 5° and 75° relative to the axis.

Preferably the or each inclined portion is inclined at an angle of between 5° and 20° relative to the axis.

An air-bag or inflatable element may be provided with a gas duct as described above.

In order that the invention may be more readily understood, and so that further features thereof may be appreciated, the invention will now be described, by way of example, with reference to the accompanying drawings in which:
FIGURE 1 is a diagrammatic view of a gas duct in accordance with the invention,
FIGURE 2 is a corresponding view illustrating a modified embodiment,
FIGURE 3 is a corresponding view illustrating a further modified embodiment,
FIGURE 4 is a corresponding view illustrating yet a further modified embodiment,
FIGURE 5 is a corresponding view illustrating yet another modified embodiment,
FIGURE 6 is a corresponding view illustrating yet another embodiment,
FIGURE 7 is a corresponding view illustrating even another embodiment of the invention, and
FIGURE 8 is a view illustrating a further and final embodiment of the invention.

In the drawings various angles of inclination have been emphasised.

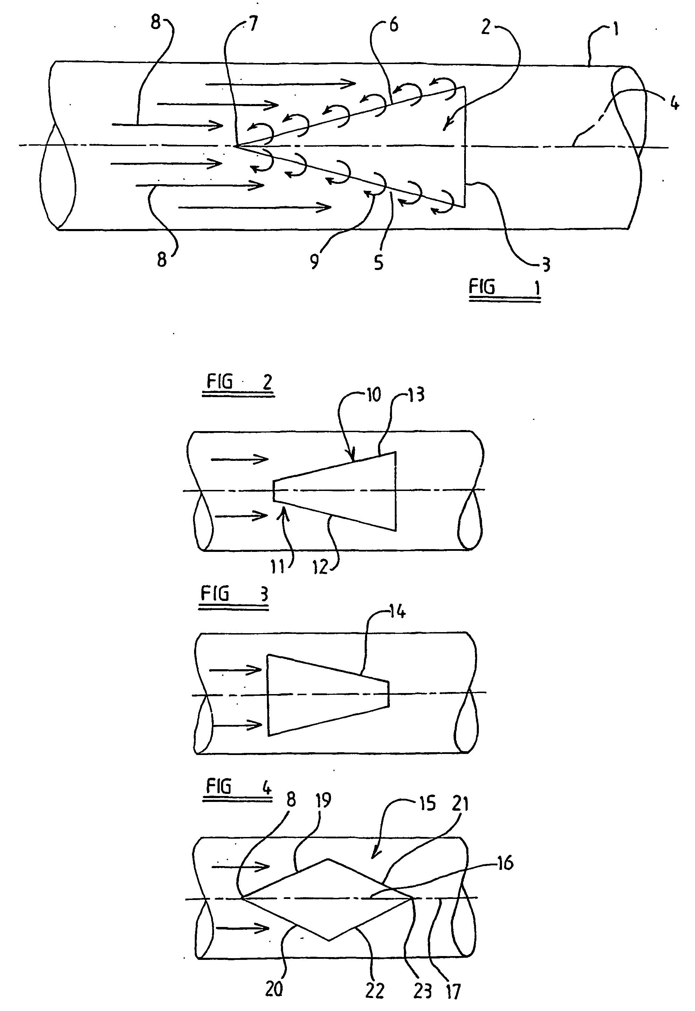

Referring initially to Figure 1 of the accompanying drawings, a gas duct is formed of an elongate rigid pipe 1 which may be formed of an appropriate metal. The gas duct is provided with a plurality of outlet apertures 2, only one of which is shown. Each outlet aperture 2 is an unobstructed or "cut-out" aperture, that is to say an aperture which does not have a "scoop" as shown in EP 0 940 304. The aperture is thus a simple opening cut (or formed in some equivalent way) in the wall of the pipe 1. The gas duct is for supplying gas to an inflatable element or air-bag such as, for example, an inflatable element as disclosed in GB 2,297,950 A.

The aperture 2, as shown in Figure 1, is of triangular form. The triangular aperture has a base 3 which extends transversely to the longitudinal axis 4 of the gas duct. The aperture has two inwardly inclined linear sides 5, 6 which meet at an apex 7 which is up-stream of the base 3 of the aperture. The triangle, in the illustrated embodiment, is an isosceles triangle, meaning that the triangle is symmetrical about a line parallel with the axis 4 of the gas duct.

The duct is intended to be connected to an inflator so that gas may flow through the duct, as shown by the arrows 8. The flow of gas within the duct is laminar flow parallel with the axis 4 of the duct.

The aperture thus presents two linear sides 5, 6, the sides being inclined at an angle of approximately 10° relative to the longitudinal axis 4 of the duct, and thus being inclined relative to the flow of gas 8 through the duct.

Whilst not wishing to be bound by the following theory, it is believed that the presence of an inclined substantially linear side to the aperture, that is to say a side that is inclined relative to the axis of the duct and thus also to the direction of flow of gas within the gas duct, causes turbulence in the gas exiting through the aperture. A similar turbulence is not experienced in the region of the side of an aperture that is parallel with the direction of the flow of gas. Thus, as indicated by the arrows 9, as gas flows out of the duct through the aperture 2, the gas flowing past the inclined sides 5, 6 of the aperture will tend to "curl back" or form eddies. Thus the flow of gas becomes a turbulent flow rather than a laminar flow. It is believed that a turbulent flow is less likely to damage the fabric of an air-bag than a laminar flow.

Referring to Figure 2, it can be seen that the aperture 10 shown in that figure has a configuration very similar to that of the aperture 2 shown in Figure 1, save that the triangle is slightly truncated in the region of the apex of the triangle to provide a narrow end 11 of the aperture. Thus the aperture is trapezoidal, but has two substantially linear sides 12, 13 that are inclined relative to the axis of the gas duct. In the embodiment of Figure 2, the narrow, or more pointed end of the trapezoid is directed up-stream of the gas duct.

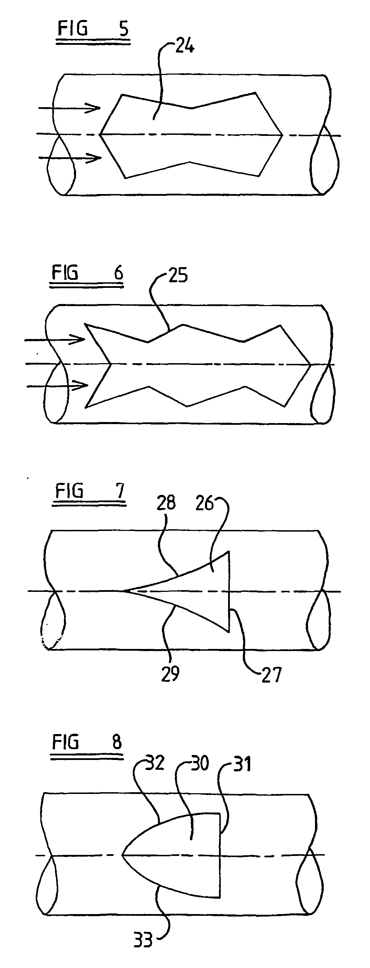

Figure 3 illustrates a further embodiment in which the aperture 14 is of the same configuration as that of the aperture 10, but the trapezoid is inverted so that the narrow end is down-stream of the gas duct. It is found that an arrangement of this type provides an equally advantageous effect.

Whilst the invention has been described above with reference to embodiments in which two opposed sides of the aperture are linear and are inclined to the axis of the gas duct, it is possible for the two opposed sides of the aperture to have more than one inclined linear portion. Referring now to Figure 4, an aperture 15 is illustrated which is of "diamond" form. The aperture has one "diagonal" axis 16 aligned with the axis 17 of the gas duct, and thus has a generally pointed end 18 directed up-stream, with two diverging side walls 19, 20, each inclined to the axis of the gas duct at about 15° and being associated with two further side walls 21, 22 which converge towards a further pointed end 23 which is located down-stream of the duct. The further side walls are also inclined to the axis of the duct at 15°. Thus, each side of the aperture comprises two linear portions each of which is inclined to the axis of the gas duct.

Embodiments of the invention need not be limited to apertures where the opposed dies have two linear portions. Figure 5 illustrates an aperture 24 of complex form where each side comprises four linear portions, each linear portion being inclined at an angle to the axis of the gas duct. In this embodiment some portions are inclined to the axis of the duct by angles of up to 75°, and others by angles of approximately 15°. Figure 6 illustrates yet another embodiment in which an aperture 25 is illustrated, the aperture 25 being of complex form and actually having each side of the aperture defined by six linear portions each inclined to the axis of the gas flow duct.

Referring now to Figure 7 of the accompanying drawings, an embodiment is illustrated which is very similar to that of Figure 1 save that the aperture 26 that is present in the conduit is of generally triangular form having a base 27 and two inwardly inclined sides 28, 29 (which are equivalent to the sides 5 and 6 of the embodiment of Figure 1), the sides 28 and 29 being of slightly curved form so that the aperture 25 is of triangular form with two concave sides.

Figure 8 illustrates another corresponding embodiment of the invention in which a single substantially triangular aperture 30 has a base 31 and two sides 32, 33 (which correspond with the sides 5 and 6 of the embodiment of Figure 1), the sides 32, 33 being curved so that the substantially triangular aperture has two convex sides.

Whilst the invention has been described with reference to apertures having linear sides and curved sides, apertures having sides of other configurations which are of substantially linear form, may be utilised.

It is preferred that the or each inclined substantially linear portion of the side edge of the aperture is inclined to the axis of the duct with an angle of inclination between 5° and 75°. Beneficial results are obtained where an inclination of a linear side edge portion of between 5° and 75° is present, and the preferred angle of inclination is between 5° and 20°.

Whilst the invention has been described with reference to embodiments which are symmetrical about the axis of the pipe, with opposed edges of the aperture both being inclined, it is to be understood that an aperture may be used where only one side edge of the aperture is inclined to the axis of the pipe. The edge or edges of the aperture need not be strictly linear, but could be slightly curved.

In the described embodiment the pipe is a rigid metal pipe. However, the pipe may be of other rigid materials, such as plastics, and in alternative embodiments the pipe may be flexible. The pipe may even be formed of fabric.

In the present specification "comprise" means "includes or consists of" and "comprising" means "including or consisting of".

## Claims

1. A gas supply duct for an air-bag or inflatable element, the gas supply duct being a pipe (1) of elongate form and defining a longitudinal axis (4), the gas supply pipe (1) being provided with at least one aperture (2, 10, 14, 15, 24, 25, 26, 30) therein, wherein the aperture (2, 10, 14, 15, 24, 25, 26, 30) having at least one side edge portion (5, 6; 12, 13; 19, 20; 21, 22; 28, 29; 32, 33) which is inclined relative to the longitudinal axis (4) and is substantially linear in its planar projection, **characterised in that** the aperture (2, 10, 14, 15, 24, 25, 26, 30) being a opening cut in the wall of the pipe (1) forming an unobstructed, cut-out aperture, the aperture not having an inwardly directed scoop.

2. A duct according to Claim 1 wherein two opposed sides of the aperture (2) are each provided with at least one said inclined edge portion (5, 6) which is substantially linear.

3. A duct according to Claim 1 or 2 wherein the aperture (2) is substantially triangular.

4. A duct according to Claim 1 or 2 wherein the aperture (10, 14) is trapezoidal.

5. A duct according to Claim 3 or 4 wherein a narrower end of the aperture (10) is up-stream of the gas flow duct.

6. A duct according to Claim 3 or 4 wherein the narrower end of the aperture (14) is down-stream of the gas flow duct.

7. A duct according to Claim 2 wherein the aperture (15, 24, 25) has two opposed sides, each opposed side having two or more of said substantially linear inclined portions (19, 20; 21, 22).

8. A duct according to Claim 7 wherein the aperture (15) is of substantially diamond form.

9. A duct according to Claim 7 wherein the aperture (15, 24, 25) has two opposed sides, each side comprising four or more said substantially linear inclined portions (19,20; 21, 22).

10. A duct according to any one of the preceding Claims wherein the or each inclined portion (5, 6; 12, 13; 19, 20; 21, 22; 28, 29; 32, 33) is inclined at an angle of between 5° and 75° relative to the longitudinal axis (4).

## Patentansprüche

1. Gaszuleitungskanal für einen Airbag oder ein aufblasbares Element, wobei der Gaszuleitungskanal eine Röhre (1) in länglicher Form ist und eine Längsachse (4) definiert, wobei in der Gaszuleitungsröhre (1) mindestens eine Öffnung (2, 10, 14, 15, 24, 25, 26, 30) ausgebildet ist, wobei die Öffnung (2, 10, 14, 15, 24, 25, 26, 30) mindestens einen Seitenrandabschnitt (5, 6; 12, 13; 19, 20; 21, 22; 28, 29; 32, 33) hat, der in Bezug auf die Längsachse (4) geneigt ist und im Wesentlichen in seiner planaren Projektion linear ist, **dadurch gekennzeichnet, dass** die Öffnung (2, 10, 14, 15, 24, 25, 26, 30) ein Loch ist, das in die Wand der Röhre (1) geschnitten ist, und eine ungehinderte oder ausgeschnittene Öffnung bildet, wobei die Öffnung keine nach innen gerichtete Schaufel aufweist.

2. Kanal nach Anspruch 1, wobei zwei gegenüberliegende Seiten der Öffnung (2) jeweils mit mindestens einem geneigten Randabschnitt (5, 6) versehen sind, der im Wesentlichen linear ist.

3. Kanal nach Anspruch 1 oder 2, wobei die Öffnung (2) im Wesentlichen dreieckig ist.

4. Kanal nach Anspruch 1 oder 2, wobei die Öffnung (10, 14) trapezförmig ist.

5. Kanal nach Anspruch 3 oder 4, wobei ein schmäleres Ende der Öffnung (10) stromaufwärts des Gasströmungskanals liegt.

6. Kanal nach Anspruch 3 oder 4, wobei das schmälere Ende der Öffnung (14) stromabwärts des Gasströmungskanals liegt.

7. Kanal nach Anspruch 2, wobei die Öffnung (15, 24, 25) zwei gegenüberliegende Seiten hat, wobei jede gegenüberliegende Seite zwei oder mehr der im Wesentlichen linearen geneigten Abschnitte (19, 20; 21, 22) aufweist.

8. Kanal nach Anspruch 7, wobei die Öffnung (15) im Wesentlichen eine Diamantform hat.

9. Kanal nach Anspruch 7, wobei die Öffnung (15, 24, 25) zwei gegenüberliegende Seiten hat, wobei jede Seite vier oder mehr der im Wesentlichen linearen, geneigten Abschnitte (19, 20; 21, 22) umfasst.

10. Kanal nach einem der vorangehenden Ansprüche, wobei der oder jeder geneigte Abschnitt (5, 6; 12, 13; 19, 20; 21, 22; 28, 29; 32, 33) in einem Winkel zwischen 5°und 75° relativ zu der Längsachse (4) geneigt ist.

## Revendications

1. Conduite d'alimentation en gaz pour un coussin gonflable ou élément gonflable, la conduite d'alimentation en gaz étant un tuyau (1) de forme allongée et définissant un axe longitudinal (4), le tuyau d'alimentation en gaz (1) étant pourvu d'au moins une ouverture (2, 10, 14, 15, 24, 25, 26, 30) dans celui-ci, dans laquelle l'ouverture (2, 10, 14, 15, 24, 25, 26, 30) présente au moins une partie de bord latérale (5, 6 ; 12, 13 ; 19, 20 ; 21, 22 ; 28, 29 ; 32, 33) qui est inclinée par rapport à l'axe longitudinal (4) et est sensiblement linéaire dans sa projection planaire, **caractérisée en ce que** l'ouverture (2, 10, 14, 15, 24, 25, 26, 30) est une ouverture découpée dans la paroi du tuyau (1) formant une ouverture découpée non obstruée, l'ouverture ne présentant pas de buse d'admission dirigée vers l'intérieur.

2. Conduite selon la revendication 1, dans laquelle deux côtés opposés de l'ouverture (2) sont chacun pourvus d'au moins une partie de bord inclinée (5, 6) qui est sensiblement linéaire.

3. Conduite selon la revendication 1 ou 2, dans laquelle l'ouverture (2) est sensiblement triangulaire.

4. Conduite selon la revendication 1 ou 2, dans laquelle l'ouverture (10, 14) est trapézoïdale.

5. Conduite selon la revendication 3 ou 4, dans laquelle une extrémité plus étroite de l'ouverture (10) est en amont de la conduite de gaz.

6. Conduite selon la revendication 3 ou 4, dans laquelle l'extrémité plus étroite de l'ouverture (14) est en aval de la conduite de gaz.

7. Conduite selon la revendication 2, dans laquelle l'ouverture (15, 24, 25) a deux côtés opposés, chaque côté opposé ayant deux ou plus parties inclinées sensiblement linéaires (19, 20 ; 21, 22).

8. Conduite selon la revendication 7, dans laquelle l'ouverture (15) est sensiblement en forme de losange.

9. Conduite selon la revendication 7, dans laquelle l'ouverture (15, 24, 25) a deux côtés opposés, chaque côté comprenant quatre ou plus parties inclinées sensiblement linéaires (19, 20 ; 21, 22).

10. Conduite selon l'une quelconque des revendications précédentes, dans laquelle la ou chaque partie inclinée (5, 6 ; 12, 13 ; 19, 20 ; 21, 22 ; 28, 29 ; 32, 33) est inclinée selon un angle compris entre 5° et 75° par rapport à l'axe longitudinal (4).
